(19) **Europäisches Patentamt**
**European Patent Office**
**Office européen des brevets**

(11) **EP 2 264 603 A1**

(12) **EUROPEAN PATENT APPLICATION**
published in accordance with Art. 153(4) EPC

(43) Date of publication:
**22.12.2010 Bulletin 2010/51**

(21) Application number: **09730135.2**

(22) Date of filing: **06.04.2009**

(51) Int Cl.:
**G06F 12/06** (2006.01)    **G06F 12/00** (2006.01)
**G06F 12/02** (2006.01)

(86) International application number:
**PCT/JP2009/001588**

(87) International publication number:
**WO 2009/125572 (15.10.2009 Gazette 2009/42)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **08.04.2008 JP 2008099900**

(71) Applicant: **Panasonic Corporation
Kadoma-shi
Osaka 571-8501 (JP)**

(72) Inventor: **TANAKA, Kazuhito
Osaka-shi, Osaka 540-6207 (JP)**

(74) Representative: **Kügele, Bernhard et al
Novagraaf International SA
25, avenue du Pailly
CH-1220 Les Avanchets-Genève (CH)**

(54) **MEMORY CONTROL CIRCUIT AND MEMORY CONTROL METHOD**

(57)    The memory control circuit has an access count setting circuit and a DRAM access control circuit. The access count setting circuit receives a minimum activation interval time for different rows in the same bank of the SDRAM, an operating speed, and the number of banks, and calculates an optimal number of readings or writings to each bank. The DRAM access control circuit generates a command sequence and an address for reading or writing a image signal to the SDRAM.

FIG. 1

## Description

## TECHNICAL FIELD

The present invention relates to a method of reading and writing image data to an SDRAM (Synchronous Dynamic Random Access Memory).

## BACKGROUND ART

Recently, SDRAMs have become widespread as memory used for image processing. The SDRAMs have a high-speed input/output interface and can relatively inexpensively provide bulk memory. Many SDRAMs that support DDR (double data rate) other than conventional SDR (single data rate) have recently been used and the speed of input/output interfaces has increased.

Although the speed of the input/output interface of a SDRAM has been increased, the operating speed of a DRAM core has not been essentially increased since a time of the SDRAMs with the SDR. In other words, the SDRAM supports the speed increase of the input/output interface by increasing the width of the data transfer bus that is connected to the input/output interface. For example, even in an SDRAM with DDR where the input/output interface operates at a transmission rate of 800 Mbps and at a clock frequency of 400 MHz, a minimum interval time (hereinafter referred to as "tRC") of continuous activation (hereinafter referred to as "activate") of the same bank is about 50 ns. Therefore, the time restriction for access to the same bank of the SDRAM becomes about 40 times the time restriction of the input/output interface. As a result, this time restriction largely constrains continuous access to the SDRAM.

Next, a conventional method of continuously accessing an SDRAM is described. A first conventional method disclosed by patent literature 1 is an example of a DRAM. In other words, during access as reading or writing operation to each bank of the DRAM, pre-charge and refresh are performed in another bank. In the first conventional method, continuous access to the DRAM is achieved by performing bank interleave. However, this method does not allow that the high-speed input/output interface of the SDRAM is driven while the tRC is adaptively adjusted.

In a second conventional method disclosed by patent literature 2, an SDRAM itself switches the banks appropriately so as to allow continuous access to another bank at a timing of accessing all data on a column of each bank. The second conventional method allows continuous access to the SDRAM. However, the SDRAM itself is different from a general-purpose SDRAM. Therefore, the SDRAM of the second method has low general versatility. The cost of the SDRAM therefore increases, disadvantageously. When image data is read or written, the image data is divided into packets of specific data amounts, and accesses of a specific interval occur at various addresses of the SDRAM. However, the restriction of the tRC to the random access of the SDRAM is not concealed. Therefore, continuous access is not allowed at some addresses.

When a image signal is read or written to the SDRAM in order to delay the image signal, generally, a plurality of image signals needs to be read or written. Therefore, addresses where reading or writing is performed on the DRAM generally change frequently in a random manner.

As discussed above, the DRAM of the conventional method cannot support continuous access to random addresses when a image signal is read or written. Therefore, disadvantageously, the data transfer band of the SDRAM cannot be effectively used. A method of using the data transfer band at a maximum by complicated address management and optimizing the order of the reading or writing of the image data is also considered. In this method, however, the sequence of control commands to the SDRAM is complicated. As a result, the complication becomes a burden on a control circuit for the SDRAM. The scale of the memory used for a control circuit and an interference buffer becomes large, disadvantageously.

[Patent Literature 1] Unexamined Japanese Patent Publication No. H04-149892
[Patent Literature 2] Unexamined Japanese Patent Publication No. 2000-148580

## SUMMARY OF THE INVENTION

A memory control circuit of the present invention reads and writes image data to an SDRAM having a plurality of banks, and has an access count setting circuit and a DRAM access control circuit.

The access count setting circuit performs the following processes:

receiving a minimum activation interval time for different rows in the same bank of the SDRAM, an operating frequency of the SDRAM, and the number of banks of the SDRAM; and
calculating the number of bank accesses, which is the number of continuous readings or writings to each bank of the SDRAM .

The DRAM access control circuit outputs a reading or writing sequence to each bank of the SDRAM based on the number of bank accesses calculated by the access count setting circuit.

According to such a configuration, the number of readings or writings to each bank of the SDRAM can be optimized based on the minimum activation interval time for different rows in the same bank of the SDRAM, the operating frequency of the SDRAM, and the number of banks of the SDRAM. A problem where the speed of an internal DRAM core is lower than that of the input/output interface of the SDRAM can be solved. Image signals can be continuously read or written to the SDRAM. Therefore, the data transfer band of the SDRAM can be effectively used.

A memory control method of the present invention is used for reading or writing image data to an SDRAM having a plurality of banks, and has an access count setting step and a DRAM access control step.

The access count setting step includes:

receiving a minimum activation interval time for different rows in the same bank of the SDRAM, an operating frequency of the SDRAM, and the number of banks of the SDRAM; and

calculating the number of bank accesses, which is the number of continuous readings or writings to each bank of the SDRAM .

The DRAM access control step includes outputting a reading or writing sequence to each bank of the SDRAM based on the number of bank accesses calculated in the access count setting step.

## BRIEF DESCRIPTION OF DRAWINGS

Fig. 1 is a block diagram showing a configuration of a memory control circuit in accordance with an exemplary embodiment of the present invention.

Fig. 2 is a flowchart illustrating a memory control method in accordance with the exemplary embodiment.

Fig. 3 is a timing chart of data writing to a single data rate SDRAM.

Fig. 4 is a timing chart of data writing to a double data rate SDRAM with DDR1-SDRAM standard.

Fig. 5 is a timing chart of data writing to a double data rate SDRAM with DDR2-SDRAM standard.

Fig. 6 is a block diagram showing a configuration of an access count setting circuit in accordance with the exemplary embodiment.

Fig. 7A is a timing chart of data writing to an SDRAM.

Fig. 7B is a timing chart of data writing to the SDRAM.

Fig. 8 is an illustration diagram of mapping of logical addresses to physical addresses of the SDRAM.

Fig. 9 is another illustration diagram of mapping of the logical addresses to the physical addresses of the SDRAM.

Fig. 10 is an example of the timing chart of a command sequence during writing to the SDRAM.

Fig. 11 is another example of the timing chart of the command sequence during writing to the SDRAM.

Fig. 12 is yet another example of the timing chart of the command sequence during writing to the SDRAM.

Fig. 13 is still another example of the timing chart of the command sequence during writing to the SDRAM.

## REFERENCE MARKS IN THE DRAWINGS

1 access count setting circuit
2 DRAM access control circuit
3 data assembling circuit
4 DRAM write control circuit
5 DRAM read control circuit
6 DRAM data bus control circuit
602 memory
604 calculating circuit
606 multiplying circuit
608 comparing circuit
610 setting circuit
612 clock count
614 access time
618 same bank access period
620 minimum activation interval time

## DETAILED DESCRIPTION OF PREFERRED EMBODIMENTS

An exemplary embodiment of the present invention will be described hereinafter with reference to the following drawings.

## (EXEMPLARY EMBODIMENT)

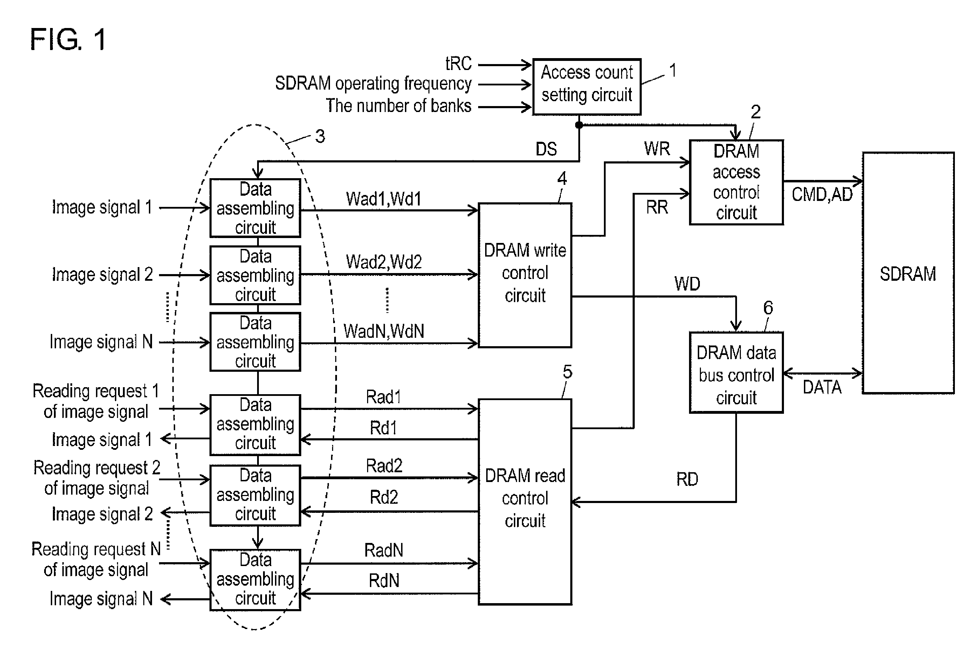

A memory control circuit in accordance with an exemplary embodiment of the present invention will be described hereinafter. Fig. 1 is a block diagram showing a configuration of the memory control circuit in accordance with the exemplary embodiment. The memory control circuit of the exemplary embodiment reads and writes image data to an SDRAM having a plurality of banks. The memory control circuit includes access count setting circuit 1, DRAM access control circuit 2, data assembling circuit 3, DRAM write control circuit 4, DRAM read control circuit 5, and DRAM data bus control circuit 6.

Access count setting circuit 1 performs the following processes:

receiving a minimum activation interval time for different rows in the same bank of the SDRAM, an operating frequency of the SDRAM, and the number of banks of the SDRAM; and

calculating the number of bank accesses, which is the number of readings or writings to each bank of the SDRAM .

Access count setting circuit 1 outputs data size DS corresponding to a minimum data amount when reading and writing to the SDRAM are performed.

When a image signal is written to the SDRAM, a plurality of image signals 1 through N is input to data assembling circuit 3. Data assembling circuit 3 assembles data series Wd1 through WdN having data amount of data size DS for respective image signals 1 through N based on data size DS output from access count setting circuit 1. Data assembling circuit 3 outputs write logical addresses Wad1 through WadN of the SDRAM together with data series Wd1 through WdN for respective image signals 1 through N.

DRAM write control circuit 4 receives write logical addresses Wad1 through WadN and data series Wd1 through WdN for image data that is output from data assembling circuit 3. DRAM write control circuit 4, after adjusting operation, outputs adjustment write data WD and adjustment write address WR to the SDRAM. DRAM access control circuit 2 outputs, from adjustment write address WR, command sequence CMD and address AD for performing a writing operation to the SDRAM. DRAM data bus control circuit 6 outputs write data from adjustment write data WD to the SDRAM through a bidirectional bus, and writes image signals 1 through N to a predetermined address of the SDRAM.

When image signals 1 through N are read from the SDRAM, reading requests 1 through N of the plurality of image signals is independently input to data assembling circuit 3. Data assembling circuit 3 generates read logical addresses Rad1 through RadN for reading from the SDRAM by data amount of data size DS based on data size DS output from access count setting circuit 1.

DRAM read control circuit 5 receives read logical addresses Rad1 through RadN for respective image data 1 through N output from data assembling circuit 3. DRAM read control circuit 5, after the adjusting operation, outputs adjustment read address RR to DRAM access control circuit 2. DRAM access control circuit 2 outputs, from adjustment read address RR, command sequence CMD and address AD that are used for performing reading operation from the SDRAM. For command sequence CMD of performing reading operation from the SDRAM, after a certain latency, read data is input from the SDRAM to DRAM data bus control circuit 6 though the bilateral bus. DRAM data bus control circuit 5 outputs SDRAM read data RD from the input read data to DRAM read control circuit 5. DRAM read control circuit 5 outputs adjustment read data Rd1 through RdN to a circuit that has output a reading request of SDRAM read data RD to data assembling circuit 3. Thus, the memory control circuit reads image signals 1 through N stored at predetermined addresses from the SDRAM. As discussed above, DRAM access control circuit 2 outputs a sequence of reading or writing to each bank of the SDRAM based on the number of bank accesses calculated by access count setting circuit 1.

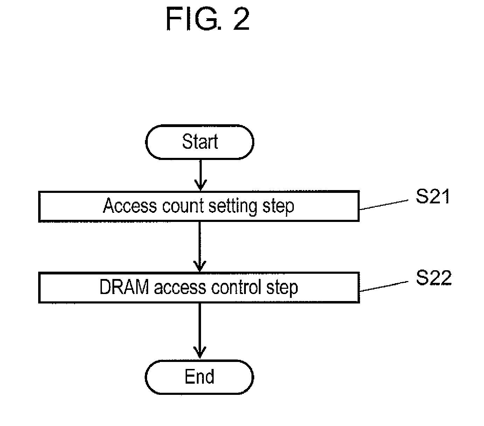

Fig. 2 is a flowchart illustrating a memory control method in accordance with the exemplary embodiment. The memory control method of the present embodiment is used for reading or writing image data to an SDRAM having a plurality of banks, and has an access count setting step and a DRAM access control step.

The access count setting step includes:

receiving a minimum activation interval time for different rows in the same bank of the SDRAM, an operating frequency of the SDRAM, and the number of banks of the SDRAM; and
calculating the number of bank accesses, which is the number of readings or writings to each bank of the SDRAM (step 21).

The DRAM access control step includes outputting a reading or writing sequence to each bank of the SDRAM based on the number of bank accesses calculated in the access count setting step (step 22).

As discussed above, access count setting circuit 1 outputs data size DS corresponding to the minimum data amount when reading and writing to the SDRAM are performed. DRAM access control circuit 2 writes a plurality of image signals 1 through N to the SDRAM based on data size DS using DRAM access control circuit 2, data assembling circuit 3, and DRAM write control circuit 4. Image signals 1 through N are read from the SDRAM based on data size DS by data assembling circuit 3, DRAM read control circuit 5, and DRAM data bus control circuit 6.

More detailed operation of the memory control circuit is described. Access count setting circuit 1 sets the number of readings or writings to each bank so as to continuously perform reading or writing to all banks, based on the minimum activation interval time for different rows in the same bank of the SDRAM, the operating frequency of the SDRAM, and the number of SDRAM banks. In other words, access count setting circuit 1 sets the number of readings or writings to each bank under the following condition: as a result of continuously performing the reading or writing operation to all banks, the interval (hereinafter referred to as "same bank access period") of accessing the same bank again is tRC or longer (hereinafter referred to as "continuous access condition"), or the same bank access period is substantially equal to the tRC. The tRC is substantially constant regardless of the type of the SDRAM.

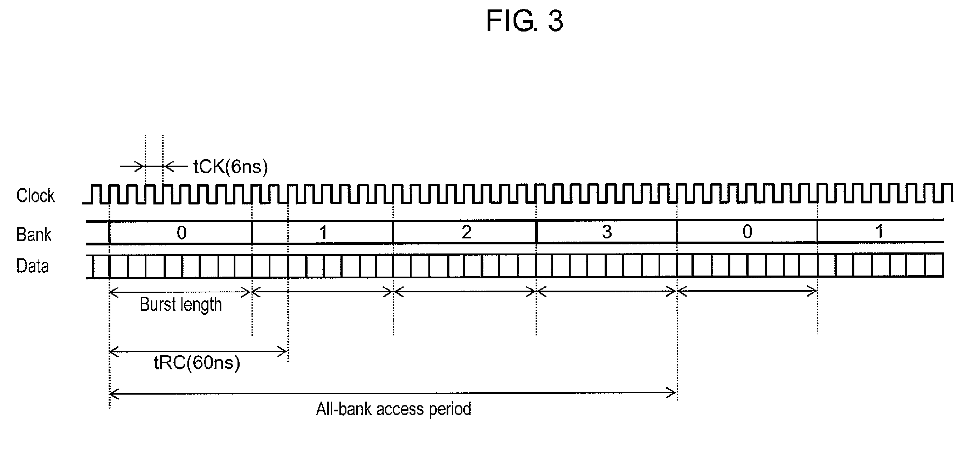

Next, an example of the calculating method of the number of readings or writings in each bank of a general single data rate SDRAM is described as follows. Fig. 3 is a timing chart of data writing to the single data rate SDRAM. As an example, the set values of the memory control circuit are assumed as follows: clock frequency is 166 MHz (tCK showing clock period is 6 ns), operating frequency of the input/output interface is 166 MHz (period is 6 ns), the number of banks is 4, tRC is 60 ns, and burst length is 8 data/burst. In Fig. 3, the upper waveform shows a clock waveform to be input to the SDRAM. The intermediate waveform shows sequential access to 4 banks denoted with 0 through 3. The lower waveform shows the timing of data that is input and output to the SDRAM.

Since the burst length is 8, the minimum unit of one reading or writing operation to the single data rate SDRAM is 8 data. Therefore, the single data rate SDRAM requires 8-clock period for processing of one burst. Since the number of banks is 4, the period of 32 clocks (8 clocks multiplied by 4 banks) is required in order to perform reading operation of all of 4 banks by reading or writing one burst in each bank. While, since the tRC is 60 ns, the tRC is converted into 10 clocks, and the continuous access condition can be satisfied by reading or writing one burst or more in each bank. When the burst length is 4, the same bank access period is 16 clocks, namely a half of the case of the burst length of 8, in the access of one burst in each bank. Also in this case, the continuous access condition is satisfied.

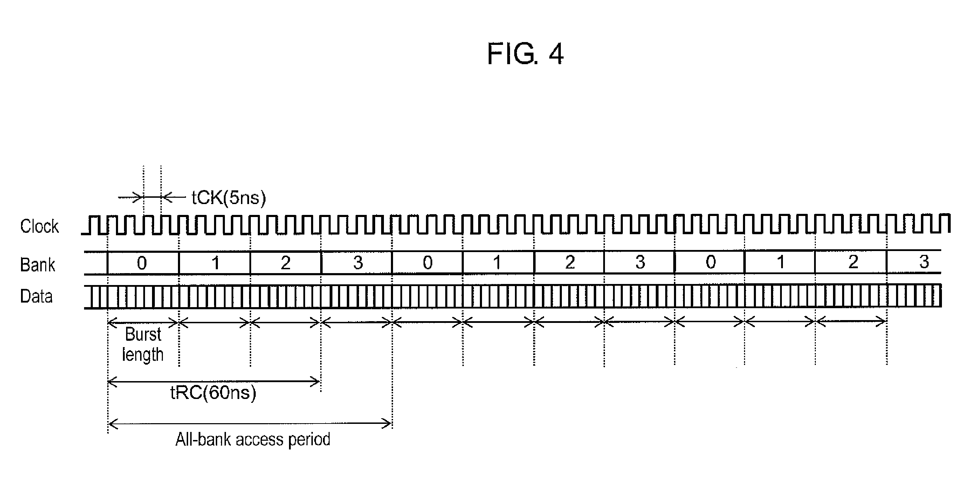

Next, an example of the calculating method of the number of readings or writings in each bank to a double data rate SDRAM with DDR1-SDRAM standard is described. Fig. 4 is a timing chart of data writing to the double data rate SDRAM with DDR1-SDRAM standard. As an example, the set values of the memory control circuit are assumed as follows: clock frequency is 200 MHz (tCK showing clock period is 5 ns), operating frequency of the input/output interface is 400 MHz (period is 2.5 ns), the number of banks is 4, tRC is 60 ns, and burst length is 8 data/burst. The upper, intermediate, and lower waveforms are the same as in Fig. 3, and hence are not described.

Since the burst length is 8, the minimum unit of one reading or writing operation to the SDRAM is 8 data. Therefore, the double data rate SDRAM requires 4-clock period for processing of one burst. Since the number of banks is 4, the period of 16 clocks (4 clocks multiplied by 4 banks) is required in order to perform reading operation in all of 4 banks by reading or writing one burst in each bank. Since the tRC is 60 ns, the tRC is converted into 12 clocks, and the continuous access condition can be satisfied by reading or writing one burst or more in each bank. When the burst length is 4, the same bank access period is 8 clocks, namely a half of the case of the burst length of 8, in the access of one burst in each bank, and hence the continuous access condition cannot be satisfied. However, the continuous access condition can be satisfied by accessing two bursts or more to each bank.

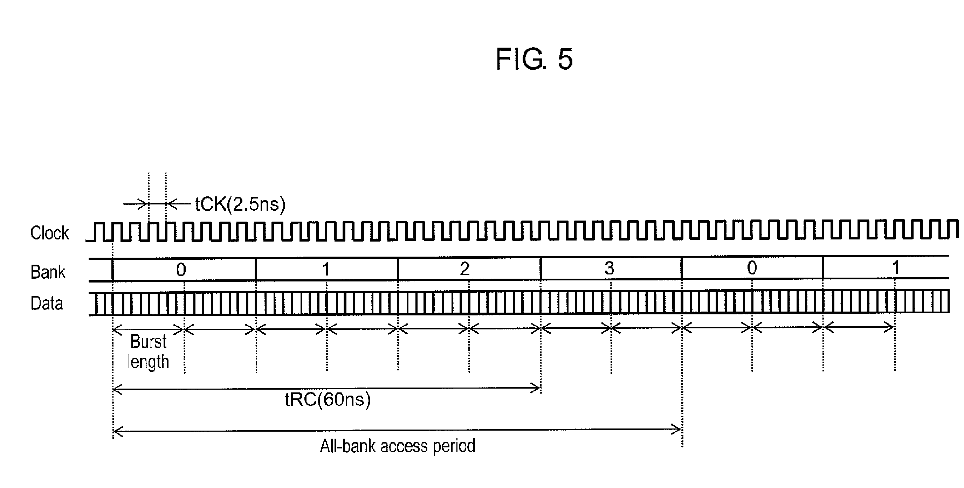

Next, an example of the calculating method of the number of readings or writings in each bank to a double data rate SDRAM with DDR2-SDRAM standard is described. Fig. 5 is a timing chart of data writing to the double data rate DRAM with DDR2-SDRAM standard. As an example, the set values of the memory control circuit are assumed as follows: clock frequency is 400 MHz (tCK showing clock period is 2.5 ns), operating frequency of the input/output interface is 800 MHz (period is 1.25 ns), the number of banks is 4, tRC is 60 ns, and burst length is 8 data/burst. The upper, intermediate, and lower waveforms are the same as in Fig. 3 and Fig. 4, and hence are not described.

When one burst is read or written in each bank as in the above-mentioned example, the period of 16 clocks (4 clocks multiplied by 4 banks) is required for performing reading operation of all of 4 banks. Since the tRC is 60 ns, the tRC is converted into 24 clocks, and the continuous access condition cannot be satisfied when one burst is read or written in each bank.

Therefore, in the present embodiment, number of accesses to each bank is set so that the continuous access condition can be satisfied. For example, by accessing two bursts or more in each bank, the continuous access condition can be satisfied.

As is clear from the above-mentioned examples, minimum processing time Pb (min) required for satisfying the continuous access condition when the reading or writing operation to each bank is performed can be calculated using

$$Pb(min)=RU(RU(tRC/TCK)/Nb),$$

where, the number of SDRAM banks is Nb, and the clock period of the SDRAM is tCK.

Here, RU( ) means that decimal point rounding-up processing is applied to the numerical value or mathematical expression in ( ).

The reading or writing operation to each bank of the SDRAM can be performed only by burst length. The result obtained by rounding up Pb (min) by burst length becomes a minimum processing time when the operation is actually allowed in each bank satisfying the continuous access condition. In Fig. 3 and Fig. 4, the banks are generated in the ascending order, but the access order of the banks may be set arbitrarily when each bank is accessed once in a fixed order in the period of four bursts. In Fig. 5, the banks are generated in the ascending order every two bursts. Also in this case, the access order of the banks may be set arbitrarily when a condition that two-burst continuous access to each bank occurs once continuously in the period of eight bursts is satisfied.

Data size DS output from access count setting circuit 1 depends on the data bus width of the SDRAM, and becomes a value indicating the total amount of data transferred to/from the SDRAM in a period (hereinafter referred to as "continuous data access period") when one period of continuous readings and writings is applied to all banks. In other words, in the case of a single data rate SDRAM, the data transfer amount (hereinafter referred to as "continuous access data amount") to/from the SDRAM in the continuous data access period is obtained by multiplying the data bus width by the number of clocks in the continuous data access period. In the case of a double data rate SDRAM, the continuous access data amount becomes two times the product of the data bus width of the SDRAM and the number of clocks of the continuous data access period.

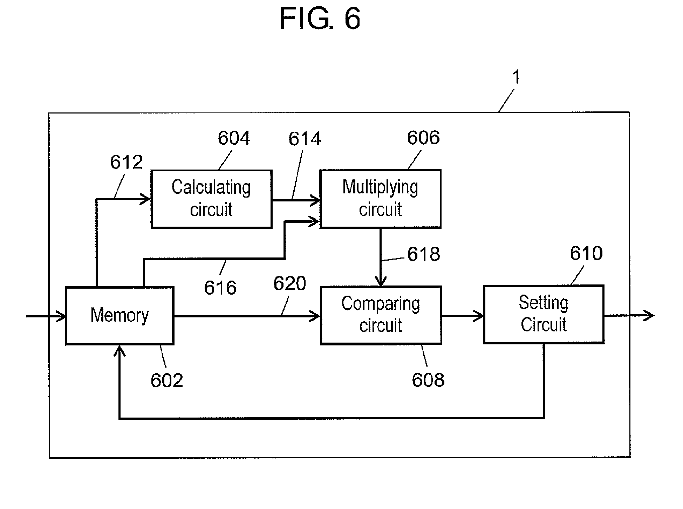

An example of the specific configuration of access count setting circuit 1 is described hereinafter with reference with Fig. 6. Fig. 6 is a block diagram showing the configuration of access count setting circuit 1 in accordance with the exemplary embodiment. As shown in Fig. 6, access count setting circuit 1 has memory 602, calculating circuit 604, multiplying circuit 606, comparing circuit 608, and setting circuit 610. Memory 602 records the number of banks of the SDRAM, the clock period of the SDRAM, a parameter (the number of transfer data of burst length value) of the burst length, the number of clocks required for data processing of one burst length, and the minimum activation interval time for different rows in the same bank of the SDRAM. Minimum activation interval time 620 of the predetermined data output from memory 602 is input to comparing circuit 608. In other words, a recording circuit for recording minimum activation interval time 620 in each bank is included in memory 602.

Calculating circuit 604 reads, from memory 602, the clock period of the SDRAM and the number 612 of clocks required for data processing of one burst length, and calculates access time 614 to each bank by multiplying the clock period by the number of clocks. Multiplying circuit 606 calculates continuous data access period (same bank access period) 618 by multiplying access time 614 by the number 616 of banks of the SDRAM read from memory 602. Comparing circuit 608 compares continuous data access period (same bank access period) 618 calculated by multiplying circuit 606 with minimum activation interval time 620 read from memory 602. Setting circuit 610 sets the number of accesses to each bank based on the result of comparing circuit 608.

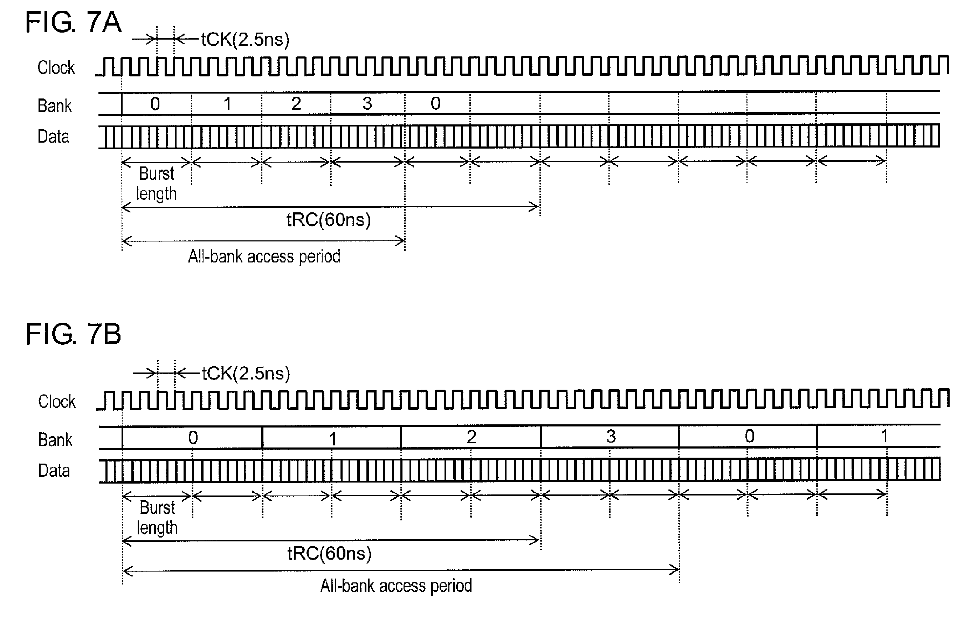

Based on the configuration, one example of a specific operation of access count setting circuit 1 is described with reference to Fig. 7A and Fig. 7B. For simplifying the description, the values used in Fig. 7A and Fig. 7B are the same in the above-mentioned examples. In other words, the following operating parameters of the SDRAM are used: clock frequency is 400 MHz (tCK showing clock period is 2.5 ns), operating frequency of the input/output interface is 800 MHz (period is 1.25 ns), the number of banks is 4, tRC is 60 ns, and burst length is 8 data/burst. The indications of the upper, intermediate, and lower waveforms are the same as in Fig. 3, Fig. 4, and Fig. 5, and hence are not described.

Since the burst length is 8, the minimum unit of one reading or writing operation to the SDRAM is 8 data. Therefore, the operation at the double data rate requires 4-clock period for processing of one burst.

First, calculating circuit 604 reads, from memory 602, the clock period (in this example, 2.5 ns) of the SDRAM and the number 612 of clocks (in this example, 4 clocks) required for data processing of one burst length, and calculates access time 614 (in this example, 2.5x4=10 ns) to each bank by multiplying the clock period by the number of clocks. Here, the number 612 of clocks is calculated based on the parameter (in this example, 8 data/burst) of the burst length.

Next, multiplying circuit 606 calculates continuous data access period (same bank access period) 618 (in this example, 10ns$\times$4=40ns) by multiplying access time 614 (10 ns), which is calculated by calculating circuit 604, by the number of banks 616 (in this example, 4 banks) of the SDRAM, which is read from memory 602.

Next, comparing circuit 608 compares same bank access period 618 (40 ns), which is calculated by multiplying circuit 606, with minimum activation interval time 620 (in this example, 60 ns), which is read from the memory. In this case, the value of same bank access period 618 (40 ns) is smaller than minimum activation interval time 620 as shown in Fig. 7A, so that the memory control circuit cannot access the memory because of the difference of 20 ns. In the present invention, in this case, setting circuit 610 changes the number 612 of clocks (in this example, 8 clocks) stored in the memory as shown in Fig. 7B. After that, the number 612 of clocks is changed, and the above-mentioned processing is repeated.

Specifically, the clock period (in this example, 2.5 ns) of the SDRAM and the number 612 of clocks (in this example, 8 clocks), which is set by setting circuit 610, are read from memory 602. Then, calculating circuit 604 calculates access time 614 (in this example, 2.5x8=20 ns) to each bank by multiplying the clock period by the number 612 of clocks.

Next, multiplying circuit 606 calculates continuous data access period (same bank access period) 618 (in this example, 20nsx4=80ns) by multiplying access time 614 (20 ns), which is calculated by calculating circuit 604, by the number 616 of banks (in this example, 4 banks) of the SDRAM, which is read from memory 602.

Next, the comparing circuit compares same bank access period 618 (80 ns), which is calculated by multiplying circuit 606, with minimum activation interval time 620 (in this example, 60 ns), which is read from the memory. In this case, the value of same bank access period 618 (80 ns) is larger than minimum activation interval time 620 as shown in Fig. 7B. In this case, the memory control circuit can efficiently access the memory even when the memory is always used and the speed of the clock period of the SDRAM is increased.

Data assembling circuit 3 operates using, as the minimum unit, the continuous access data amount when it is read or written to the SDRAM. The logical address of the SDRAM when the reading and writing to the DRAM is performed becomes a value using the continuous access data amount as the minimum unit. In the following usage pattern of the SDRAM, it is assumed that burst length is 8, data bus width is 16, continuous data access period is 4 bursts (access of one burst in each bank), SDRAM column bit width is 8 bits, SDRAM row bit width is 12 bits, and the number of SDRAM banks is 4 (2 bits).

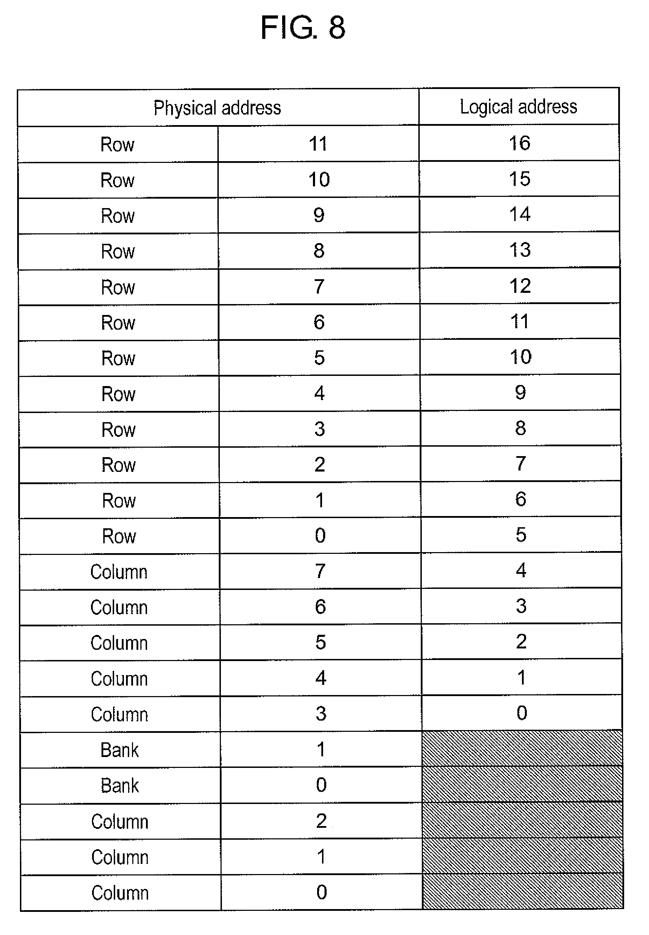

The continuous access data amount is the product of the burst length, data bus width, and continuous data access period, and is 512 bits. Fig. 8 shows an example of mapping of logical addresses to the physical addresses of the SDRAM. The physical address is the sum of bit widths of the addresses of rows, columns, and banks, and has 24 bits. Since the burst length is 8, three lowest bits of the column direction and two bank bits cannot be accessed as logical addresses, and an address space of a total of 17 bits (5 bits of the column direction and 12 bits of the row direction) is formed. In the logical address structure of Fig. 8, the column bits and row bits are arranged from the lowest bit in the ascending order. However, the arranging method of the logical addresses is not limited.

In the following usage pattern of the SDRAM, it is assumed that burst length is 8, data bus width is 16, continuous data access period is 8 bursts (access of 2 bursts in each bank), SDRAM column bit width is 8 bits, SDRAM, row bit width is 12 bits, and the number of SDRAM banks is 4 (2 bits).

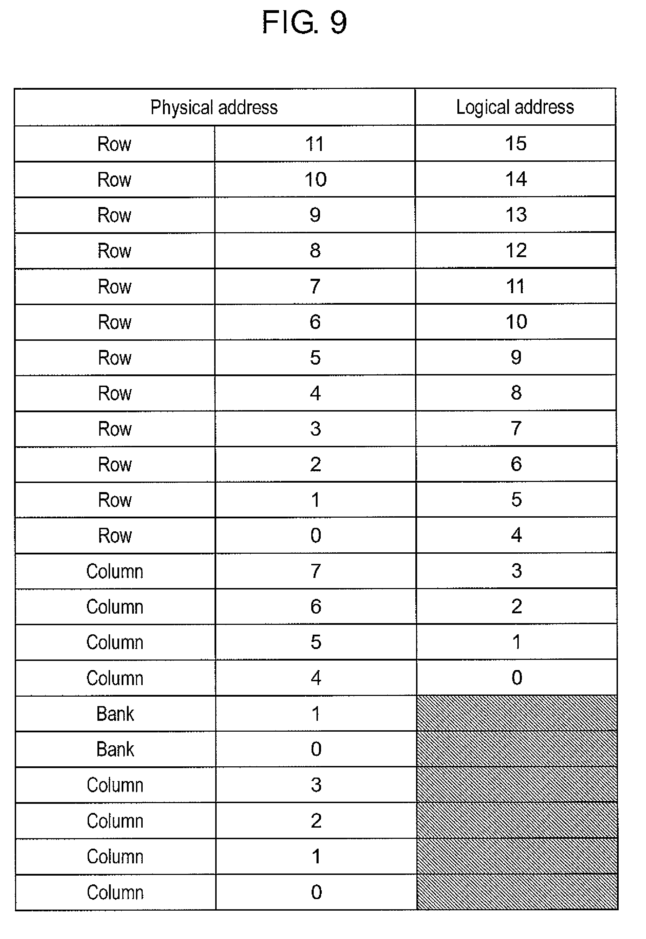

The continuous access data amount is the product of the burst length, data bus width, and continuous data access period, and is 1024. Fig. 9 shows another example of mapping of logical addresses to the physical addresses of the SDRAM. The physical address is the sum of bit widths of the addresses of rows, columns, and banks, and has 24 bits. Since the burst length is 8 and continuous access of two bursts is performed in each bank, four lowest bits of the column direction and two bank bits cannot be accessed as logical addresses. An address space of a total of 16 bits (4 bits of the column direction and 12 bits of the row direction) is formed. In the logical address structure of Fig. 9, the column bits and row bits are arranged from the lowest bit in the ascending order. However, the arranging method of the logical addresses is not limited.

DRAM access control circuit 2 receives adjustment write address WR or adjustment read address RR, which is logical address after adjustment output from data assembling circuit 3, and outputs command sequence CMD and address AD to the SDRAM. Operation of generating the command sequence and address in DRAM access control circuit 2 is described.

When reading and writing to the SDRAM are performed based on the burst length, a target bank and a target row address are specified, an active (ACTIVE) command is issued to the row to be accessed, and activation (activate) is performed. In the row activated for each bank, reading and writing need to be performed to a predetermined address of the column direction.

When writing to the SDRAM is performed, a column address and a bank are specified, a write command is issued to the row having been activated, and writing operation is performed. At this time, for one write command, writing in a period specified by the burst length is performed to the SDRAM. In order to write two or more continuous bursts, write commands need to be continuously issued at a time interval corresponding to the burst length. The data written in the SDRAM in response to the write commands needs to be input to the SDRAM at a predetermined timing according to the timing of issuing the write commands. DRAM data bus control circuit 6 inputs, to the SDRAM, write data to the SDRAM at the predetermined timing according to the timing of issuing the write commands. When a predetermined writing operation to each bank is completed, pre-charge is performed to the bank, and the activated bank needs to be put into an inactive state.

When reading from the SDRAM is performed, the command sequence and address to be issued to the SDRAM are similar to those during the writing. During the writing, data to be written to the SDRAM is output synchronously with the timing of issuing the write commands. During the reading, however, the reading data is output from the SDRAM after a predetermined latency after the read command. Therefore, the reading data output from the SDRAM by DRAM data bus control circuit 6 needs to be output to a circuit having output a reading request.

The SDRAM is restricted in the sequence described when it is accessed, the following commands need to be issued to each bank of the SDRAM.

The commands are:

(1) activating a row;
(2) issuing a reading or writing command; and
(3) executing pre-charge.

When continuous access to the SDRAM is performed, as many commands as the number corresponding to the number of banks need to be issued in same bank access period 618.

Thus, the reading or writing sequence to each bank of the SDRAM that is output from DRAM access control circuit 2 is completed by performing one activation, one or more continuous readings or writings, and one pre-charge in each bank.

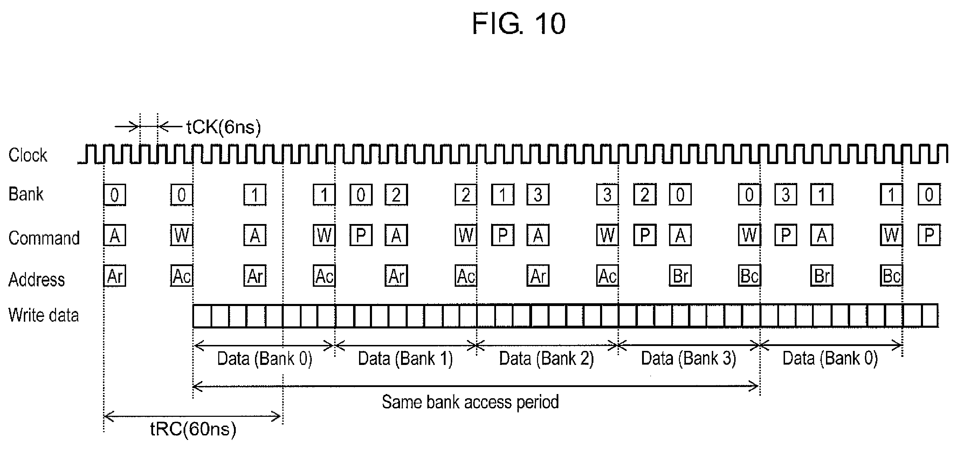

Fig. 10 is an example of the timing chart of a command sequence during writing to the SDRAM. In this example, clock frequency is 166 MHz (tCK showing clock period is 6 ns), operating frequency of the input/output interface is 166 MHz (period is 6 ns), the number of banks is 4, tRC is 60 ns, and burst length is 8 data/burst.

As shown in Fig. 10, the top waveform shows a clock waveform input to the SDRAM. The second waveform from the top shows the accessing order to 4 banks denoted with 0 through 3. The third waveform shows a command sequence to each bank. The activate command is denoted with A. The write command is denoted with W. The pre-charge command is denoted with P. The fourth waveform shows logical addresses. The row addresses are denoted with Ar or Br. The column addresses are denoted with Ac or Bc. The fifth waveform shows the timing of writing data to the SDRAM.

As shown in Fig. 10, the activate commands and write commands to the bank are issued at an interval of 4 clocks. The pre-charge can be executed for the first time after a predetermined time after write data corresponding to the burst is written to the SDRAM. Therefore, the pre-charge is executed after the write command to the bank following after the target bank. Regarding the addresses of the SDRAM, during four initial bursts, 8 data are written to row addresses Ar and column addresses Ac in each bank of the SDRAM. From bank 0 following after this sequence, continuous writing is performed to logical addresses (row address Br and column address Bc) different from the above-mentioned addresses. Continuous writing to the SDRAM can be performed.

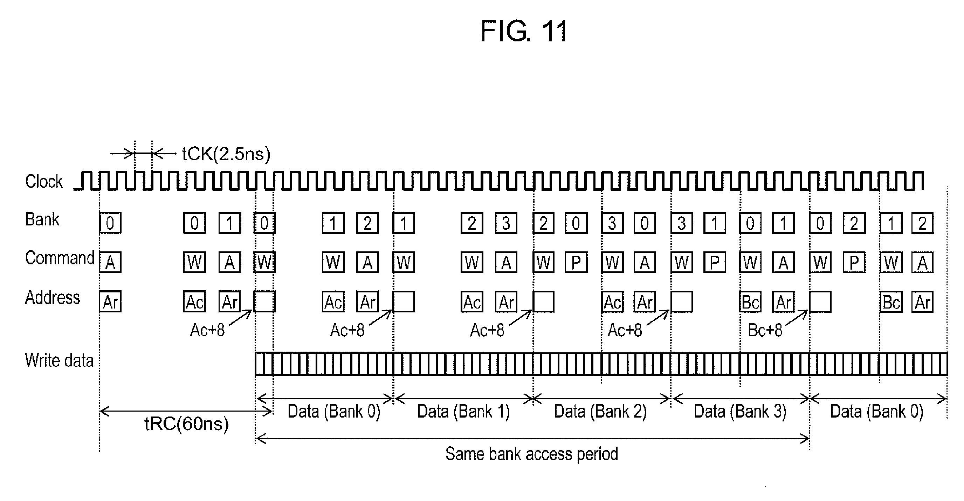

One example of the timing chart of another command sequence is described. Fig. 11 is the timing chart when two bursts are accessed in each bank. In an assumed SDRAM in this example, it is assumed that clock frequency is 400 MHz (tCK showing clock period is 2.5 ns), operating frequency of the input/output interface is 800 MHz (period is 1.25 ns), the number of banks is 4, tRC is 60 ns, and burst length is 8 data/burst.

Regarding the indications of the waveforms in Fig. 11, waveforms similar to those of Fig. 10 are not described. Only the fourth waveform from the top, namely logical addresses, is different from that of Fig. 10. Column address Ac+8 shows an address separated from column address Ac by 8 data. Similarly, column address Bc+8 shows an address separated from column address Bc by 8 data.

Two write commands are issued after one activate in each bank, and writing to the SDRAM is continuously performed in each bank in a period of two bursts. In Fig. 11, operation equivalent to the timing chart of Fig. 10 is performed except for processing every two bursts. In this example, one burst and two continuous bursts are written to each bank. However, three or more continuous writings may be performed to each bank though same bank access period 618 becomes long.

Activate commands, write commands, and pre-charge commands do not need to follow the sequence shown in the present example as long as continuous reading from the SDRAM is allowed under the constraint of the command sequence of the SDRAM. Also when reading from the SDRAM is performed, the command sequence can be generated at a similar timing.

As the commands to the SDRAM, there are also write commands and read commands having auto pre-charge. For example, by issuing one write command having auto pre-charge, pre-charge can be automatically generated inside the SDRAM after a certain time after the write command is generated. By using a write command or read command having auto pre-charge, the generating frequency of the commands can be reduced, and hence the generating circuit scale of the command sequence can be reduced and electric power can be also reduced.

In other words, the reading or writing sequence to each bank of the SDRAM, which is output from DRAM access control circuit 2, may be completed by performing one activation and one reading or writing having auto pre-charge to each bank.

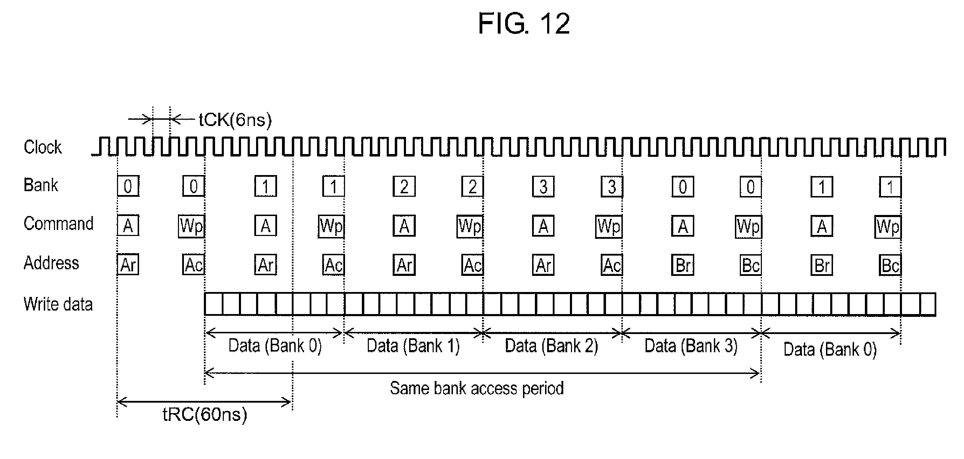

A command sequence of issuing one active command, one write command, and one pre-charge command to each bank can be replaced with an active command and a write command having auto pre-charge in each bank. Fig. 12 is an example of the command sequence of issuing the active command and the write command having auto pre-charge to each bank.

Regarding the indications of the waveforms in Fig. 12, waveforms similar to those of Fig. 10 are not described. Only the third waveform from the top, namely command sequence to each bank, is different from that of Fig. 10. A write command having auto pre-charge is denoted with Wp.

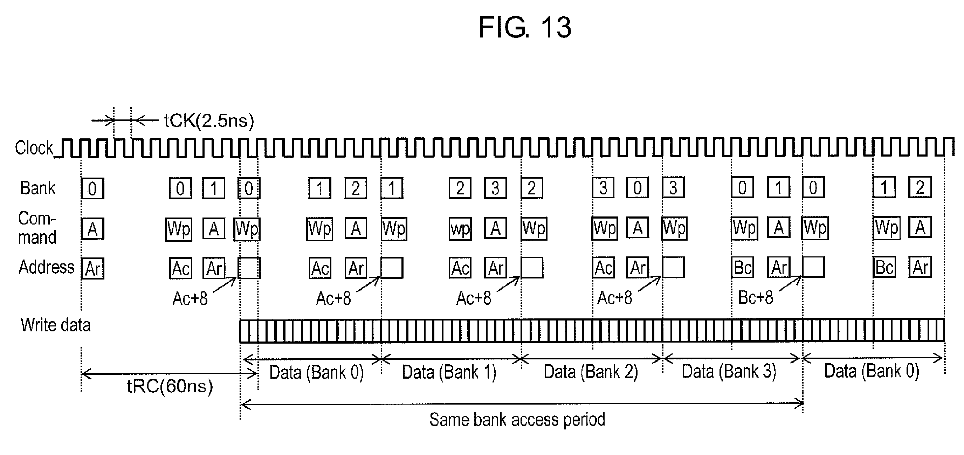

In a command sequence of performing one activate command, two or more write commands, and one pre-charge command to each bank, the pre-charge command and the write command before it can be replaced with a write command having auto pre-charge. Here, the pre-charge command and the write command have been applied to the same bank Fig. 13 is an example of the command sequence of issuing the activate command, one write command, and the write command having auto pre-charge. The indication of each waveform has been described in Fig. 11 and Fig. 12, and hence is not described.

In this example, one burst and two continuous bursts are written to each bank. However, three or more continuous writings may be performed to each bank though same bank access period 618 becomes long. In other words, the reading or writing sequence to each bank of the SDRAM output from DRAM access control circuit 2 may be completed by applying one activation, one or more readings or writings, and one reading or writing having auto pre-charge to each bank.

Activate commands, write commands, and pre-charge commands do not need to follow the above-mentioned sequence as long as continuous reading from the SDRAM is allowed under the constraint of the command sequence of the SDRAM. Also when reading from the DRAM is performed, the command sequence can be generated at a similar timing.

The number of continuous readings or writings to each bank is increased, thereby reducing the frequency of pre-charge and reducing the power consumption of the SDRAM. However, increasing the number of continuous readings and writings to each bank increases the continuous access data amount. Therefore, even when access of a data amount that is smaller than the continuous access data amount occurs, the data amount of the access is increased to the continuous access data amount. As a result, the optimal continuous access data amount needs to be determined in consideration of the power consumption, the memory capacity of the SDRAM, and the reduction in data transfer efficiency when access of a data amount smaller than the continuous access data amount occurs. When the memory capacity of the SDRAM is tight, continuous access to the SDRAM is not allowed and the data transfer efficiency decreases. However, by stopping the reading and writing operation at a period smaller than the same bank access period, the using efficiency of the memory capacity of the SDRAM can be increased.

**INDUSTRIAL APPLICABILITY**

The present invention can be used for memory control of an SDRAM or the like.

**Claims**

1. A memory control circuit for reading and writing image data to an SDRAM having a plurality of banks, the memory control circuit comprising:

   an access count setting circuit for receiving a minimum activation interval time for different rows in the same bank of the SDRAM, an operating frequency of the SDRAM, and the number of banks of the SDRAM, and for calculating the number of bank accesses, the number of bank accesses being the number of continuous readings or writings to each bank of the SDRAM; and
   a DRAM access control circuit for outputting a sequence based on the number of bank accesses calculated by the access count setting circuit, the sequence including readings or writings to each bank of the SDRAM.

2. The memory control circuit of claim 1, wherein the sequence of reading or writing to each bank of the DRAM is completed by applying one activation, one or more continuous readings or writings, and one pre-charge to each bank, the sequence being output from the DRAM access control circuit.

3. The memory control circuit of claim 1, wherein the sequence of reading or writing to each bank of the SDRAM is completed by applying one activation, and one reading or writing having auto pre-charge to each bank, the sequence being output from the DRAM access control circuit.

4. The memory control circuit of claim 1, wherein the sequence of reading or writing to each bank of the SDRAM is completed by applying one activation, one or more readings or writings, and one reading or writing having auto pre-charge to each bank, the sequence being output from the DRAM access control circuit.

5. The memory control circuit of claim 1, wherein the access count setting circuit comprises:

   a calculating circuit for calculating an access time of each bank based on a clock period of the SDRAM and the number of clocks of access to each bank;
a multiplying circuit for multiplying the access time calculated by the calculating circuit by the number of banks of the SDRAM, and for calculating a same bank access period, the same bank access period being a waiting time until re-access to the same bank;
a recording circuit for recording a minimum interval time required for activation in each bank;
a comparing circuit for comparing the same bank access period calculated by the multiplying circuit with the minimum interval time recorded in the recording circuit; and
a setting circuit for setting the number of clocks of access to each bank based on the result of the comparing circuit.

6. The memory control circuit of claim 5, wherein the access count setting circuit performs a setting so that the same bank access period is substantially equal to the minimum interval time.

7. The memory control circuit of claim 5, wherein the access count setting circuit performs a setting so that the same bank access period is the minimum interval time or longer.

8. The memory control circuit of claim 6, wherein the access count setting circuit performs the setting so that the same bank access period is the minimum interval time or longer.

9. A memory control method of reading and writing image data to an SDRAM having a plurality of banks, the memory control method comprising:

   an access count setting step of receiving a minimum activation interval time for different rows in the same bank of the SDRAM, an operating frequency of the SDRAM, and the number of banks of the SDRAM, and of calculating the number of bank accesses, the number of bank accesses being the number of continuous readings or writings to each bank of the SDRAM; and
   a DRAM access control step of outputting a sequence based on the number of bank accesses calculated by the access count setting step, the sequence including readings or writings to each bank of the SDRAM.

# FIG. 1

EP 2 264 603 A1

# FIG. 2

```
        ┌──────────────┐
        │    Start      │
        └──────┬───────┘
               │
               ▼
┌──────────────────────────────────┐
│   Access count setting step       │────── S21
└──────────────┬───────────────────┘
               │
               ▼
┌──────────────────────────────────┐
│   DRAM access control step        │────── S22
└──────────────┬───────────────────┘
               │
               ▼
        ┌──────────────┐
        │     End       │
        └──────────────┘
```

FIG. 3

EP 2 264 603 A1

FIG. 4

EP 2 264 603 A1

tCK(5ns)

Clock

Bank | 0 | 1 | 2 | 3 | 0 | 1 | 2 | 3 | 0 | 1 | 2 | 3

Data

Burst
length

tRC(60ns)

All-bank access period

# FIG. 5

EP 2 264 603 A1

# FIG. 6

1

```
              612        604        614           606
                    ┌──────────────┐        ┌──────────────┐
                    │ Calculating  │        │ Multiplying  │
                    │   circuit    │        │   circuit    │
                    └──────────────┘        └──────────────┘
                                                    │ 618
                          616   620                 ▼
     ┌──────────┐                        ┌──────────────┐        ┌──────────────┐
──▶  │  Memory  │ ─────────────────────▶ │  Comparing   │ ─────▶ │   Setting    │ ──▶
     └──────────┘                        │   circuit    │        │   Circuit    │
          ▲ 602                          └──────────────┘        └──────────────┘
          │                                    608                     610
          └──────────────────────────────────────────────────────────────┘
```

## FIG. 7A

Clock

←tCK(2.5ns)

Bank: 0 1 2 3 0

Data

Burst length

tRC(60ns)

All-bank access period

## FIG. 7B

Clock

←tCK(2.5ns)

Bank: 0 1 2 3 0 1

Data

Burst length

tRC(60ns)

All-bank access period

EP 2 264 603 A1

# FIG. 8

| Physical address | | Logical address |
|---|---|---|
| Row | 11 | 16 |
| Row | 10 | 15 |
| Row | 9 | 14 |
| Row | 8 | 13 |
| Row | 7 | 12 |
| Row | 6 | 11 |
| Row | 5 | 10 |
| Row | 4 | 9 |
| Row | 3 | 8 |
| Row | 2 | 7 |
| Row | 1 | 6 |
| Row | 0 | 5 |
| Column | 7 | 4 |
| Column | 6 | 3 |
| Column | 5 | 2 |
| Column | 4 | 1 |
| Column | 3 | 0 |
| Bank | 1 | |
| Bank | 0 | |
| Column | 2 | |
| Column | 1 | |
| Column | 0 | |

# FIG. 9

| Physical address | | Logical address |
|---|---|---|
| Row | 11 | 15 |
| Row | 10 | 14 |
| Row | 9 | 13 |
| Row | 8 | 12 |
| Row | 7 | 11 |
| Row | 6 | 10 |
| Row | 5 | 9 |
| Row | 4 | 8 |
| Row | 3 | 7 |
| Row | 2 | 6 |
| Row | 1 | 5 |
| Row | 0 | 4 |
| Column | 7 | 3 |
| Column | 6 | 2 |
| Column | 5 | 1 |
| Column | 4 | 0 |
| Bank | 1 | |
| Bank | 0 | |
| Column | 3 | |
| Column | 2 | |
| Column | 1 | |
| Column | 0 | |

# FIG. 10

EP 2 264 603 A1

# FIG. 11

tCK(2.5ns)

Clock

Bank  0  0  1  0  1  2  1  2  3  2  0  3  0  3  1  0  1  0  2  1  2

Command  A  W  A  W  W  A  W  W  A  W  P  W  A  W  P  W  A  W  P  W  A

Address  Ar  Ac  Ar  Ac  Ar  Ac  Ar  Ac  Ar  Bc  Ar  Bc  Ar

Ac+8   Ac+8   Ac+8   Ac+8   Bc+8

Write data

tRC(60ns)

Data (Bank 0)   Data (Bank 1)   Data (Bank 2)   Data (Bank 3)   Data (Bank 0)

Same bank access period

EP 2 264 603 A1

FIG. 12

## FIG. 13

EP 2 264 603 A1

| **INTERNATIONAL SEARCH REPORT** | International application No. |
|---|---|
| | PCT/JP2009/001588 |

A. CLASSIFICATION OF SUBJECT MATTER
*G06F12/06*(2006.01)i, *G06F12/00*(2006.01)i, *G06F12/02*(2006.01)i

According to International Patent Classification (IPC) or to both national classification and IPC

B. FIELDS SEARCHED

Minimum documentation searched (classification system followed by classification symbols)
G06F12/06, G06F12/00, G06F12/02

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-222180 A (Matsushita Electric Industrial Co., Ltd.), 18 August, 2005 (18.08.05), All pages; all drawings (particularly, abstract) (Family: none) | 1-9 |
| A | JP 2006-11593 A (Sony Corp.), 12 January, 2006 (12.01.06), Par. Nos. [0054] to [0060]; Figs. 13, 14 (Family: none) | 1-9 |
| A | JP 2004-164641 A (Hewlett-Packard Development Co., L.P.), 10 June, 2004 (10.06.04), Par. Nos. [0002] to [0007]; Fig. 2B & US 2004/0093457 A1 | 1-9 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 26 June, 2009 (26.06.09) | Date of mailing of the international search report 07 July, 2009 (07.07.09) |
|---|---|
| Name and mailing address of the ISA/ Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04149892 B
- JP 2000148580 A